# EUROPÄISCHE PATENTSCHRIFT

(11) **EP 0 787 112 B1**
(45) Veröffentlichungstag und Bekanntmachung des Hinweises auf die Patenterteilung: **01.07.1998**
(21) Anmeldenummer: 95935441.6
(22) Anmeldetag: 10.10.1995
(51) Int. Cl.: C04B 14/06, C04B 38/08, C08K 3/36, C09J 1/00

(54) **AEROGELHALTIGE ZUSAMMENSETZUNG, VERFAHREN ZUR IHRER HERSTELLUNG SOWIE IHRE VERWENDUNG**
COMPOSITION CONTAINING AN AEROGEL, METHOD OF PRODUCING SAID COMPOSITION AND THE USE THEREOF
COMPOSITION CONTENANT UN AEROGEL, SON PROCEDE DE FABRICATION ET SON UTILISATION

(30) Priorität: 20.10.1994 DE 4437424
(43) Veröffentlichungstag der Anmeldung: 06.08.1997
(73) Patentinhaber: HOECHST AKTIENGESELLSCHAFT, 65929 Frankfurt am Main (DE)
(72) Erfinder: GEISS, Gerhard, D-65835 Liederbach (DE); MÜLLER, Hans-Karl, D-65451 Kelsterbach (DE); PRASS, Werner, D-55130 Mainz (DE); SCHEUNEMANN, Ude, D-46147 Oberhausen (DE); ZIMMERMANN, Andreas, D-64347 Griesheim (DE)
(74) Vertreter: Luderschmidt, Schüler & Partner GbR
(86) Internationale Anmeldenummer: EP9503989
(87) Internationale Veröffentlichungsnummer: WO9612683

(56) Entgegenhaltungen:
- EP-A- 0 027 633
- EP-A- 0 031 166
- EP-A- 0 340 707
- EP-A- 0 489 319
- EP-A- 0 672 635
- FR-A- 952 723

## Beschreibung

Die Erfindung betrifft eine Zusammensetzung, die 30 bis 95 Vol.-% Aerogel-Partikel und mindestens ein wäßriges Bindemittel enthält, ein Verfahren zu ihrer Herstellung sowie ihre Verwendung.

Aerogele, insbesondere solche mit Porositäten über 60 % und Dichten unter 0,6 g/cm³, weisen aufgrund ihrer sehr geringen Dichte und hohen Porosität eine äußerst geringe thermische Leitfähigkeit auf und finden deshalb Anwendung als Wärmeisolationsmaterialien, wie in der EP-A-0 171 722 beschrieben.

Die hohe Porosität führt aber auch zu geringer mechanischer Stabilität sowohl des Gels, aus dem das Aerogel getrocknet wird, als auch des getrockneten Aerogels selbst.

Es ist ebenfalls bekannt, daß Aerogele außerordentlich geringe Dielektrizitätskonstanten mit Werten zwischen 1 und 2 aufweisen, je nach Dichte des Aerogels. Aerogele sind daher auch für elektronische Anwendungen, etwa für Hochfrequenzanwendungen prädestiniert (S. C. W. Hrubesh et al., J. Mater. Res. Vol. 8, No. 7, 1736-1741).

Neben den oben beschriebenen mechanischen Nachteilen der Aerogele ist es für elektronische Anwendungen sehr nachteilig, wenn der dielektrische Verlustfaktor groß ist. Es ist bekannt, daß durch hydrophile und polare Oberflächengruppen bzw. adsorbierte Moleküle der Verlustfaktor auf der inneren Oberfläche erhöht wird.

Aerogele werden durch Trocknung eines geeigneten Gels hergestellt. Dabei wird ein getrocknetes Gel als Aerogel bezeichnet, wenn die Flüssigkeit des Gels bei Temperaturen oberhalb der kritischen Temperatur und ausgehend von Drücken oberhalb des kritischen Drucks entfernt wird. Wird die Flüssigkeit des Gels dagegen unter Bildung einer Flüssig-Dampf-Grenzphase entfernt, bezeichnet man das entstehende Gel vielfach auch als Xerogel. Sofern nicht besonders angegeben, schließt die Verwendung des Begriffs "Aerogel" in der vorliegenden Anmeldung auch Xerogele sowie Mischungen derselben ein.

Der Formgebungsprozeß des Aerogels wird während des Sol-Gel-Übergangs abgeschlossen. Nach Ausbildung der festen Gelstruktur kann die äußere Form nur noch durch Zerkleinerung, beispielsweise Mahlen, verändert werden.

Für viele Anwendungen ist es jedoch notwendig, die Aerogele in bestimmten Formen einzusetzen. Hierzu ist es notwendig, im Anschluß an die Aerogel-Herstellung, also nach der Trocknung, einen Formgebungsschritt durchzuführen, ohne daß eine wesentliche Änderung der inneren Struktur des Aerogels im Hinblick auf die Anwendung stattfindet.

So wird in der EP-A-0 377 301 eine stabile, pumpbare, wäßrige Suspension offenbart, deren Gehalt an amorpher Kieselerde jedoch auf 5 bis 15 Gew.-% begrenzt ist. Aufgrund des niedrigen Kieselerdegehaltes ist zwar die Ausbildung einer stabilen, pumpfähigen, wäßrigen Suspension möglich, eine Anwendung als Wärmeisolationsmaterial ist jedoch aufgrund des niedrigen Gehaltes an Kieselerde ausgeschlossen.

In der EP-A-0 340 707 wird ein Dämmstoff der Dichte 0,1 bis 0,4 g/cm³ offenbart, der aus mindestens 50 Vol.-% Silica-Aerogel-Partikeln mit einem Durchmesser zwischen 0,5 und 5 mm besteht, die mittels mindestens einem organischen und/oder anorganischen Bindemittel miteinander verbunden sind. Die relativ grobe Körnung bewirkt, daß die hergestellten Dämmstoffe kein einheitliches Erscheinungsbild haben, was für viele Anwendungen nachteilig ist. Insbesondere für elektronische Anwendungen werden besonders dünne Schichten (« 0,5 mm) benötigt, die mittels den oben beschriebenen Aerogel-Partikeln nicht hergestellt werden können.

Weiterhin ist es aufgrund der groben Körnung des Aerogels nicht möglich, folienartige Wärmeisolationskörper mit einer Dicke unter 0,5 mm herzustellen. Aber auch dickere Folienschichten leiden unter den im Verhältnis zur Foliendicke, relativ großen Aerogel-Partikeln, da vor allem in den Randbereichen ein erhöhter Bindemittel-Anteil benötigt wird, der sich negativ auf die thermische Leitfähigkeit und elektronischen Eigenschaften der getrockneten Folie oder des getrockneten Formkörpers auswirkt.

In der EP-A-0 340 707 wird ferner ein Verfahren beschrieben, wonach die Aerogel-Partikel mit einem Bindemittel beschichtet und/oder vermischt werden, und die erhaltene Masse anschließend in einer Form ausgehärtet wird. Aufgrund des großen Dichteunterschiedes zwischen dem Aerogel und dem anorganischen und/oder organischen Bindemittel und der Größe der Aerogel-Partikel neigt die vermischte Masse zur Entmischung, d.h. sie ist über einen für die Anwendung und Lagerung notwendigen, längeren Zeitraum instabil. Infolgedessen kann die Formgebung nur durch relativ schnelles Aushärten der vermischten Masse in einer umschließenden Form vonstatten gehen oder durch Verringerung des Dichteunterschiedes zwischen den Aerogel-Partikeln und dem Bindemittel erfolgen, beispielsweise indem das Bindemittel zusätzlich verschäumt wird.

Da das Bindemittel einen entscheidenden Einfluß auf die spätere thermische Leitfähigkeit des getrockneten Formkörpers hat, kommt dem Verschäumen des Bindemittels noch eine weitere Bedeutung zu. Läßt man nämlich das Bindemittel ohne Verschäumen zu einem massiven Feststoff aushärten, so resultiert daraus eine typisch hohe thermische Leitfähigkeit. Durch die Verschäumung läßt sich nun, wie in der noch nicht veröffentlichten, deutschen Patentanmeldung DE-A-44 04 701 beschrieben, der Anteil des Bindemittels reduzieren, wodurch sich eine geringere thermische Leitfähigkeit ergibt. Das Verschäumen ist jedoch ein zusätzlicher und aufwendiger Verfahrensschritt, der in situ erfolgen muß und die Verwendung von Treibmittel einschließt. Für elektronische Anwendungen ist eine Verschäumtechnik unbrauchbar.

Darüber hinaus weisen die gemäß der EP-A-0 340 707 eingesetzten Partikel keine Langzeit-Stabilität auf, die für eine Lagerung der wäßrigen Zusammensetzung notwendig wäre, da die OH-Gruppen der Aerogel-Partikel lediglich mit Methanol verestert sind. Solche Estergruppen sind aber hydrolyseanfällig, wie in R. Iler, The Chemistry of Silica, Wiley & Sons, 1979, S. 694 f. beschrieben ist.

Aufgabe der vorliegenden Erfindung ist es daher, eine aerogelhaltige Zusammensetzung bereitzustellen, die eine für die jeweiligen Anwendungen ausreichend homogene Struktur aufweist, die über einen längeren Zeitraum stabil und damit gut lagerbar ist, deren Aerogel-Partikel hydrolysestabil sind, wodurch es möglich ist, Wasser als Lösungsmittel einzusetzen, und aufgrund dessen die Zusammensetzung einfach getrocknet werden kann.

Eine weitere Aufgabe der vorliegenden Erfindung ist es, eine Zusammensetzung bereitzustellen, die die zuvor genannten Kriterien erfüllt, die aber zusätzlich nach der Trocknung eine gute Haftung auf den Substratoberflächen besitzt. Eine weitere Aufgabe der vorliegenden Erfindung ist es, eine Zusammensetzung bereitzustellen, die im getrockneten Zustand eine niedrige Dielektrizitätskonstante und einen möglichst geringen dielektrischen Verlustfaktor aufweist.

Diese Aufgaben werden erfindungsgemäß gelöst durch eine Zusammensetzung, die 30 bis 95 Vol.-% Aerogel-Partikel und mindestens ein wäßriges Bindemittel enthält, die dadurch gekennzeichnet ist, daß der Teilchendurchmesser der Aerogel-Partikel kleiner als 0,5 mm ist und daß die Aerogel-Partikel dauerhaft hydrophobe Oberflächengruppen auf der inneren Oberfläche aufweiten. Der Teilchendurchmesser bezieht sich auf den mittleren Durchmesser des einzelnen Aerogel-Teilchens, da die Aerogel-Teilchen herstellungsbedingt, beispielsweise durch das Mahlen, nicht notwendigerweise eine sphärische Form aufweisen müssen. Die Verteilung der Teilchendurchmesser richtet sich nach der Anwendung. So kann für elektronische Anforderungen eine möglichst homogene Struktur, d.h. eine enge Verteilung, erwünscht sein. Ist es für Anwendungen erforderlich, daß ein hoher Volumenanteil (> 66 %) Aerogel-Partikel in der Zusammensetzung eingesetzt wird, so kann die Verteilung breiter oder sogar bimodal sein. In jedem Fall richtet sich die Obergrenze der Partikeldurchmesser nach den Anforderungen an die geforderte Homogenität und Lagerstabilität der Zusammensetzung. Daher können nur Aerogel-Partikel eingesetzt werden, die einen Durchmesser kleiner als 0,5 mm aufweisen.

Bei einem Gehalt an Aerogel-Partikel, der signifikant unter 30 Vol.-% in der Zusammensetzung liegt, würde aufgrund des niedrigen Anteils der Aerogel-Partikel, in der Zusammensetzung die positiven Eigenschaften in hohem Maße verloren gehen. Eine solche Zusammensetzung würde nicht mehr die für Aerogel-Partikel typischen hohen Porositäten, niedrigen Dichten sowie niedrigen Wärmeleitfähigkeiten aufweisen.

Ein Gehalt an Aerogel-Partikel, der signifikant über 95 Vol.-% liegt, würde zu einem Bindemittelgehalt von unter 5 Vol.-% führen. In diesem Fall wäre in getrockneten Zustand, das heißt nach Entfernen des Bindemittel-Wassers, der Anteil Bindemittel zu niedrig, um eine ausreichende Verbindung der Aerogel-Partikel untereinander zu gewährleisten.

Vorzugsweise liegt der Anteil der Aerogel-Partikel im Bereich von 50 bis 90 Vol.-%, besonders bevorzugt im Bereich von 50 bis 80 Vol.-%.

Erfindungsgemäß ist der Teilchendurchmesser der Aerogel-Partikel kleiner als 0,5 mm, vorzugsweise kleiner als 0,2 mm. Für elektronische Anwendungen kann der Durchmesser noch wesentlich kleiner sein. Aerogel-Partikel, deren mittlerer Teilchendurchmesser größer ist, würden in der erfindungsgemäßen Zusammensetzung, die in der Regel eine Suspension ist, aufgrund des Dichteunterschiedes zum wäßrigen Bindemittel und der Größe der Aerogel-Partikel zu einer inhomogenen, das heißt ungleichmäßigen, Verteilung führen. Darüber hinaus würden sich aufgrund der Teilchengröße Probleme, beispielsweise bei der Verwendung der Suspension zur Herstellung von dünnen Folien und Formteilen ergeben.

Die Dielektrizitätskonstante der getrockneten Zusammensetzung sollte insbesondere für elektronische Anwendungen vorzugsweise < 2 sein. Außerdem sollte der Verlustfaktor möglichst klein sein.

Geeignete Aerogele für die erfindungsgemäßen Zusammensetzungen sind solche auf Basis von Metalloxiden, die für die Sol-Gel-Technik geeignet sind (C.J. Brinker, G.W. Scherer, Sol-Gel-Science, 1990, Kap. 2 und 3), wie beispielsweise Si- oder Al-Verbindungen oder solche auf der Basis organischer Stoffe, die für die Sol-Gel-Technik geeignet sind, wie Melaminformaldehydkondensate (US-A 5 086 085) oder Resorcinformaldehydkondensate (US-A-4 873 218). Sie können auch auf Mischungen der obengenannten Materialien basieren. Bevorzugt verwendet werden Aerogele, enthaltend Si-Verbindungen, insbesondere SiO₂-Aerogele und ganz besonders bevorzugt SiO₂-Xerogele. Zur Reduktion des Strahlungsbeitrags der Wärmeleitfähigkeit kann das Aerogel IR-Trübungsmittel, wie z.B. Ruß, Titandioxid, Eisenoxide oder Zirkondioxid oder Mischungen derselben enthalten.

Darüber hinaus gilt, daß die thermische Leitfähigkeit der Aerogele mit zunehmender Porosität und abnehmender Dichte abnimmt. Aus diesem Grund sind Aerogele mit Porositäten über 60 % und Dichten unter 0,6 g/cm³ bevorzugt.

Zur Stabilisierung der wäßrigen Suspension ist es nämlich vorteilhaft, wenn auf der inneren Oberfläche der Aerogele hydrophobe Gruppen kovalent vorhanden sind, die unter Wassereinwirkung nicht abgespalten werden. Geeignete Gruppen zur dauerhaften Hydrophobierung sind mono-, di- oder trisubstituierte Silylgruppen der allgemeinen Formel 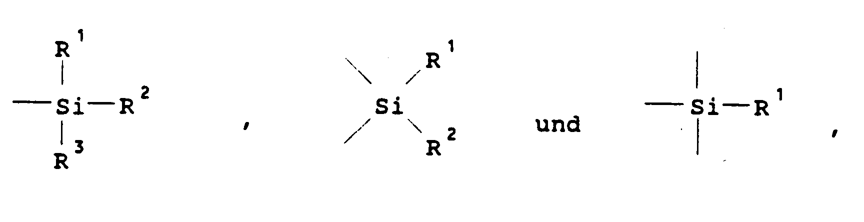 wobei
- R¹: ein Wasserstoffatom oder ein nicht reaktiver organischer, linearer, verzweigter, cyclischer, aromatischer oder heteroaromatischer Rest, vorzugsweise ein linearer, verzweigter oder cyclischer C₁-C₁₈-Alkyl-Rest oder ein C₆-C₁₄-Aryl-REst ist, sowie
- R² und R³: unabhängig voneinander, gleich oder verschieden je ein Wasserstoffatom oder ein nicht reaktiver organischer, linearer, verzweigter, cyclischer, aromatischer oder heteroaromatischer Rest, vorzugsweise linearer, verzweigter oder cyclischer C₁-C₁₈-Alkyl-Rest, ein C₆-C₁₄-Aryl-REst, eine OH- oder eine OR'-Gruppe ist, wobei R' ein linearer oder verzweigter C₁-C₆-Alkyl-Rest ist; vorzugsweise Trialkyl- und/oder Triarylsilylgruppen.

Besonders bevorzugt ist, wenn R¹, R² und R³ unabhängig voneinander gleich oder verschieden C₁-C₆-Alkyl, Cyclohexyl oder Phenyl sind.

Besonders vorteilhaft zur dauerhaften Hydrophobisierung des Aerogels ist die Verwendung von Trimethyl- und Dimethylsilylgruppen. Die Einbringung dieser Gruppen kann, wie in der WO 94/25 149 beschrieben, erfolgen oder durch Gasphasenreaktion zwischen dem Aerogel und beispielsweise einem aktivierten Trialkylsilanderivat, wie z.B. einem Chlortrialkylsilan oder einem Hexaalkyldisilazan (vergleiche R. Iler, The Chemistry of Silica, Wiley & Sons, 1979), geschehen. Verglichen mit Aerogelenen, die ausschließlich OH-Gruppen auf der inneren Oberfläche aufweisen, vermindern die so hergestellten hydrophoben Oberflächengruppen weiterhin den dielektrischen Verlustfaktor.

Als wäßrige Bindemittel werden vorzugsweise wäßrige Dispersionen eingesetzt, die auch als Bindemittel für Farben, Lacke und Klebstoffe eingesetzt werden können. Das wäßrige Bindemittel ist dadurch gekennzeichnet, daß es mindestens ein organisches Polymer und/oder anorganisches Bindemittel in Wasser dispergiert enthält und der Wassergehalt kleiner als 90 % (v/v) ist.

Solche Dispersionen sind in großer Variationsbreite auch als kommerzielle Produkte erhältlich. Als Beispiele seien hier genannt: Vinylacetat-Homo- und Copolymerdispersionen, Ethylen-Vinylacetat-Dispersionen, Styrol-Acrylat- und Styrol-Butadien-Copolymerdispersionen und Acrylat-Dispersionen.

Weiterhin sind auch anorganische Bindemittel, wie z.B. Wasserglas, wäßrige Lösungen aus Schichtsilikaten oder kolloides SiO₂ geeignet. Ebenfalls geeignet sind Mischungen aus anorganischen und/oder organischen Bindemitteln.

Die Dispersionen können sowohl durch Tenside als auch durch Schutzkolloide stabilisiert sein, wobei auch eine Stabilisierung durch Kombination von einem oder mehreren Schutzkolloiden mit einem oder mehreren ionischen und/oder nichtionischen Tensiden möglich ist. Das Bindemittel sollte eine gute Verträglichkeit mit dem Aerogel haben. Bei Bedarf können auch Bindemittel eingesetzt werden, die nach dem Trocknen zu einer wasserfesten Verklebung der Aerogel-Partikel führen. Eine solche Wasserfestigkeit kann durch bekannte Methoden, wie z.B. Vernetzung erreicht werden. Von Vorteil ist es weiterhin, wenn der Trockengehalt des Bindemittels möglichst hoch und sein Volumenanteil in der Mischung mit dem Aerogel möglichst gering ist.

Um formstabile und harte Formkörper zu erhalten, ist eine Dispersion auszuwählen, bei der die Glasübergangstemperatur des Polymers oberhalb der Raumtemperatur liegt. Umgekehrt ist es zur Herstellung von weichen Dämmstoffen notwendig, eine Dispersion auszuwählen, bei der die Glasübergangstemperatur des Polymers unterhalb der Verwendungstemperatur liegt.

Für thermische Anwendungen kann es weiterhin vorteilhaft sein, wenn in der Zusammensetzung Fasern enthalten sind. Als Fasermaterial können sowohl anorganische Fasern, wie z.B. Glasfasern, Mineralfasern, Siliziumcarbidfasern oder Kohlenstoffasern, als auch organische Fasern, wie z.B. Polyesterfasern, Aramidfasern oder Nylonfasern, verwendet werden. Die Fasern können auch beschichtet sein, z.B. Polyesterfasern, die mit einem Metall wie Aluminium metallisiert sind.

Die Brandklasse des nach der Trocknung erhaltenen Körpers wird durch die Brandklasse des Aerogels und des Bindemittels sowie gegebenenfalls die des Fasermaterials bestimmt. Um eine möglichst günstige Brandklasse (schwer entflammbar oder unbrennbar) des Verbundstoffs zu erhalten, sollte das Bindemittel aus anorganischen Bindemitteln und die Fasern aus nichtbrennbarem Material, z.B. Mineral- oder Glasfasern, oder aus schwerentflammbaren Fasern, wie z.B. Melaminharzen speziellen Polyesterfasern ("CS") oder Polybenzimidazolen (PBI), bestehen.

Um eine Erhöhung der Wärmeleitfähigkeit durch die zugegebenen Fasern zu vermeiden, sollte
a) der Volumenanteil der Fasern 0,1 bis 30 %, vorzugsweise 1 bis 10 % betragen und
b) die Wärmeleitfähigkeit des Fasermaterials vorzugsweise < 1 W/mK,
sein.

Durch geeignete Wahl von Faserdurchmesser und/oder -material kann der Strahlungsbeitrag zur Wärmeleitfähigkeit reduziert und eine größere mechanische Festigkeit erzielt werden.
Dazu soll der Faserdurchmesser bei
a) nichtmetallisierten Fasern vorzugsweise 0,1 bis 30 µm und/oder bei
b) metallisierten Fasern vorzugsweise 0,1 bis 20 µm
betragen.

Der Strahlungsbeitrag zur Wärmeleitfähigkeit kann weiter dadurch reduziert werden, daß geschwärzte Fasern, wie z.B. mit Ruß geschwärzte Polyester-Fasern oder direkt Kohlenstoffasern, verwendet werden.

Es ist ebenfalls möglich, Ruß als Zusatzstoff zu der Zusammensetzung hinzuzufügen. Dabei eignen sich insbesondere solche Rußtypen, die kleine Teilchendurchmesser besitzen und durch eine möglichst geringe Kristallinität ausgezeichnet sind.

Die mechanische Festigkeit des nach der Trocknung erhaltenen Körpers wird weiter durch Länge und Verteilung der Fasern in der Zusammensetzung beeinflußt.

Die erfindungsgemäßen Zusammensetzungen lassen sich herstellen, indem man die Aerogel-Partikel sowie gegebenenfalls die Fasern und/oder den Ruß mit dem wäßrigen Bindemittel mischt.

Das Mischen kann dabei in jeder nur denkbaren Weise durchgeführt werden. So ist es einerseits möglich, die mindestens zwei Komponenten gleichzeitig in die Mischvorrichtung einzubringen, andererseits kann aber auch eine der Komponenten vorgelegt und die anderen dann zugesetzt werden.

Auch die für das Mischen notwendige Mischvorrichtung ist in keinster Weise beschränkt. Es kann jede dem Fachmann für diesen Zweck bekannte Mischvorrichtung verwendet werden.

Der Mischvorgang wird solange durchgeführt, bis eine annähernd gleichmäßige Verteilung der Aerogel-Partikel in der Zusammensetzung vorliegt. Dabei kann der Rührvorgang sowohl über die Zeitdauer, als auch beispielsweise über die Umdrehungsgeschwindigkeit der Rührvorrichtung geregelt werden.

Die erfindungsgemäßen Zusammensetzungen eignen sich nach ihrer Trocknung aufgrund ihrer geringen Wärmeleitfähigkeit als Wärmeisolationsmaterialien oder aufgrund ihrer kleinen Dielektrizitätskonstante und ihres kleinen dielektrischen Verlustfaktors für elektronische Anwendungen.

Die Trocknung der erfindungsgemäßen Zusammensetzung wird vorzugsweise in einem Temperaturbereich von 0 bis 100°C durchgeführt. Das anzuwendende Trocknungsverfahren kann dabei aus einer Vielzahl von dem Fachmann bekannten Verfahren ausgewählt werden.

Die erfindungsgemäßen Zusammensetzungen sind außerdem selbst als Bindemittel für andere Materialien, insbesondere Isolationsmaterialien, wie z.B. als Granulat vorliegende Aerogel-Partikel (mit großem Korndurchmesser) geeignet.

Aufgrund ihrer Fließfähigkeit können die erfindungsgemäßen Suspensionen in beliebige Formen gegossen oder gepumpt werden, so daß nach der Trocknung entsprechende Formkörper aus isolierendem Material entstehen.

Es ist auch möglich, die erfindungsgemäßen Zusammensetzungen beispielsweise in Form einer Suspension zur Beschichtung auf Oberflächen aufzutragen, wodurch sie aufgrund ihres Haftvermögens gut geeignet sind. Gegebenenfalls kann es von Vorteil sein, wenn die Oberfläche zuvor durch gängige Verfahren, wie z.B. elektrische Entladungen aktiviert, und dadurch die Haftung verbessert wird. Es können aber auch spezielle Haftvermittler bzw. Zwischenschichten, z.B. aus Silikat, hinzu auf dem eigentlichen Substrat aufgebracht werden, bevor die Zusammensetzung aufgebracht wird. Geeignete Verfahren zum Auftragen sind z.B. Sprühen, Spachteln, Streichen oder Tauchen. Nach Trocknung der aufgetragenen Schichten erhält man gut haftende, wärmeisolierende sowie schallabsorbierende Oberflächenbeschichtungen mit geringer Dielektrizitätskonstante und keinem dielektrischen Verlustfaktor.

Daneben können die erfindungsgemäßen Zusammensetzungen als Schallabsorptionsmaterialien direkt oder in Form von Resonanzabsorbern verwendet werden, da sie eine geringe Schallgeschwindigkeit und, verglichen mit monolithischen Aerogelen, eine höhere Schalldämpfung aufweisen.

Es ist ebenfalls möglich, die Wirkung von Ultraschallsendern durch Aufbringen einer solchen Zusammensetzung in Form einer Schicht zu erhöhen.

Die Erfindung wird im folgenden anhand von Ausführungsbeispielen näher beschrieben.

### Beispiel 1

In einem 200 ml Becherglas werden 60 ml einer wäßrigen Dispersion aus Styrol/Acrylat-Copolymerisat, Feststoffgehalt: 19 Gew.-% (34 ml Mowilith DM 760, 26 ml Wasser) vorgelegt und 125 ml hydrophobes Aerogel-Granulat mit einer Korngröße im Bereich von 50 bis 250 µm (Schüttdichte 0,08 g/cm³) mit einem Propellerrührer bei 1200 U/Min 20 Min. vermischt bis eine fließfähige Suspension entsteht. Die Suspension wird nun zwischen 2 der Enddicke des Formkörpers entsprechenden Barrieren ausgezogen und 4 h bei 80°C getrocknet.

Nach dem Trocknen entsteht ein weißer Formkörper mit einer Dichte von 0,175 g/cm³. Die Wärmeleitfähigkeit beträgt 0,035 W/mK.

### Beispiel 2

In einem 200 ml Becherglas werden 60 ml einer wäßrigen Dispersion aus Styrol/Acrylat-Copolymerisat; Feststoffgehalt: 19 Gew.-% (34 ml Mowilith DM 760, 26 ml Wasser) vorgelegt und 125 ml hydrophobes Aerogel-Granulat mit einer Korngröße im Bereich von 50 bis 250 µm (Schüttdichte 0,08 g/cm³) mit einem Propellerrührer bei 1200 U/Min 20 Min. vermischt bis eine fließfähige Suspension entsteht. Die Suspension wird nun zwischen 2 der Enddicke des Formkörpers entsprechenden Barrieren ausgezogen und 12 h bei Raumtemperatur getrocknet.

Nach dem Trocknen entsteht ein 1 mm dicker Formkörper mit einer Dichte von 0,177 g/cm³. Die Wärmeleitfähigkeit beträgt 0,035 W/mK.

### Beispiel 3

In einem 200 ml Becherglas werden 60 ml einer wäßrigen Dispersion aus Styrol/Acrylester-Copolymerisat; Feststoffgehalt: 28 Gew.-% (34 ml Mowilith DM 611, 26 ml Wasser) vorgelegt und 125 ml hydrophobes Aerogel-Granulat mit einer Korngröße im Bereich von 50 bis 250 µm (Schüttdichte 0,08 g/cm³) und 3,5 Gew.-% (bezogen auf die Aerogelmasse) Glasfasern mit einer Länge von 4,5 mm mit einem Propellerrührer bei 1200 U/Min 15 Min. vermischt bis eine fließfähige Suspension entsteht. Die Suspension wird nun zwischen 2 der Enddicke des Formkörpers entsprechenden Barrieren ausgezogen und 7 h bei 80°C getrocknet.

Nach dem Trocknen entsteht ein 6 mm dicker Formkörper mit einer Dichte von 0,17 g/cm³. Die Wärmeleitfähigkeit beträgt 0,046 W/mK.

### Beispiel 4

In einem 200 ml Becherglas werden 60 ml einer wäßrigen Dispersion aus Acrylester/Vinylacetat/Ethylen-Copolymerisat; Feststoffgehalt: 28 Gew.-% (26 ml Mowilith VDM 1340, 34 ml Wasser) vorgelegt und 125 ml hydrophobes Aerogel-Granulat mit einer Korngröße im Bereich von 50 bis 250 µm (Schüttdichte 0,08 g/cm³) mit einem Propellerrührer bei 1200 U/Min 20 Min. vermischt bis eine leicht pastöse Suspension entsteht. Die Suspension wird nun zwischen 2 der Enddicke des Formkörpers entsprechenden Barrieren ausgezogen und 6 h bei 80°C getrocknet.

Nach dem Trocknen entsteht ein 5 mm dicker Formkörper mit einer Dichte von 0,14 g/cm³. Die Wärmeleitfähigkeit beträgt 0,032 W/mK. Die Wärmeleitfähigkeit der Formkörper in den Beispielen 1 bis 4 wurde mit einer Heizdrahtmethode (s. z.B. O. Nielsson, G. Rüschenpöhler, J. Groß, J. Fricke, High Temperatures-High Pressures, Vol. 21, 267-274 (1989)) gemessen.

## Patentansprüche

1. Zusammensetzung, die 30 bis 95 Vol.-% Aerogel-Partikel und mindestens ein wäßriges Bindemittel enthält, dadurch gekennzeichnet, daß der Teilchendurchmesser der Aerogel-Partikel kleiner als 0,5 mm ist und daß die Aerogel-Partikel dauerhaft hydrophobe Oberflächengruppen auf der inneren Oberfläche aufweisen.

2. Zusammensetzung gemäß Anspruch 1, dadurch gekennzeichnet, daß der Anteil der Aerogel-Partikel im Bereich von 50 bis 90 Vol.-% liegt.

3. Zusammensetzung gemäß Anspruch 1 oder 2, dadurch gekennzeichnet, daß der Teilchendurchmesser der Aerogel-Partikel kleiner als 0,2 mm ist.

4. Zusammensetzung gemäß mindestens einem der Ansprüche 1 bis 3, dadurch gekennzeichnet, daß das Aerogel ein SiO₂-Aerogel ist.

5. Zusammensetzung gemäß mindestens einem der Ansprüche 1 bis 4, dadurch gekennzeichnet, daß die hydrophoben Oberflächengruppen Trialkylsilylgruppen und/oder Triarylsilylgruppen sind.

6. Zusammensetzung gemäß mindestens einem der Ansprüche 1 bis 5, dadurch gekennzeichnet, daß die Aerogel-Partikel Porositäten über 60 % und Dichten unter 0,6 g/cm³ aufweisen.

7. Zusammensetzung gemäß mindestens einem der Ansprüche 1 bis 6, dadurch gekennzeichnet, daß das wäßrige Bindemittel eine Dispersion ist die mindestens ein organisches Polymer und/oder anorganisches Bindemittel enthält und deren Wassergehalt weniger als 90 % (v/v) beträgt.

8. Zusammensetzung gemäß mindestens einem der Ansprüche 1 bis 7, dadurch gekennzeichnet, daß die Zusammensetzung 0,1 bis 30 Vol.-% Fasern enthält.

9. Zusammensetzung gemaß mindestens einem der Ansprüche 1 bis 8, dadurch gekennzeichnet, daß die Zusammensetzung ein IR-Trübungsmittel enthält.

10. Verfahren zur Herstellung einer Zusammensetzung gemäß mindestens einem der Ansprüche 1 bis 9, dadurch gekennzeichnet, daß man die Aerogel-Partikel mit dem wäßrigen Bindemittel mischt.

11. Verwendung einer Zusammensetzung gemäß mindestens einem der Ansprüche 1 bis 9 zur Herstellung eines Dämmstoffs, eines Klebstoffs und/oder einer Folie sowie als Hilfsmittel in der Elektrotechnik.

## Claims

1. A composition comprising from 30 to 95% by volume of aerogel particles and at least one aqueous binder, wherein the particle diameter of the aerogel particles is less than 0.5 mm, and the aerogel particles have permanently hydrophobic surface groups on their internal surface.

2. A composition as claimed in claim 1, wherein the proportion of aerogel particles is in the range from 50 to 90% by volume.

3. A composition as claimed in claim 1 or 2, wherein the particle diameter of the aerogel particles is less than 0.2 mm.

4. A composition as claimed in at least one of claims 1 to 3, wherein the aerogel is an SiO₂ aerogel.

5. A composition as claimed in at least one of claims 1 to 4, wherein the hydrophobic surface groups are trialkylsilyl groups and/or triarylsilyl groups.

6. A composition as claimed in at least one of claims 1 to 5, wherein the aerogel particles have porosities of greater than 60% and densities of less than 0.6 g/cm³.

7. A composition as claimed in at least one of claims 1 to 6, wherein the aqueous binder is a dispersion which comprises at least one organic polymer and/or inorganic binder and has a water content of less than 90% (v/v).

8. A composition as claimed in at least one of claims 1 to 7, wherein the composition includes from 0.1 to 30% by volume of fibers.

9. A composition as claimed in at least one of claims 1 to 8, wherein the composition includes an IR opacifier.

10. A process for preparing a composition as claimed in at least one of claims 1 to 9, wherein the aerogel particles are mixed with the aqueous binder.

11. A method of using a composition as claimed in at least one of claims 1 to 9 for producing an insulating material, an adhesive and/or a film, or as an auxiliary material in electrical engineering.

## Revendications

1. Composition, qui contient 30 à 95 % en volume de particules d'aérogel et au moins un liant aqueux, caractérisée en ce que le diamètre des particules d'aérogel est inférieur à 0,5 mm et en ce que les particules d'aérogel présentent des groupes superficiels hydrophobes de manière durable sur la superficie interne.

2. Composition suivant la revendication 1, caractérisée en ce que la fraction des particules d'aérogel est de l'ordre de 50 à 90 % en volume.

3. Composition suivant l'une des revendications 1 et 2, caractérisée en ce que le diamètre des particules d'aérogel est inférieur à 0,2 mm.

4. Composition suivant au moins l'une des revendications 1 à 3, caractérisée en ce que l'aérogel est un aérogel de SiO₂.

5. Composition suivant au moins l'une des revendications 1 à 4, caractérisée en ce que les groupes superficiels hydrophobes sont des groupes trialkylsilyle et/ou triarylsilyle.

6. Composition suivant au moins l'une des revendications 1 à 5, caractérisée en ce que les particules d'aérogel présentent des porosités supérieures à 60 % et des densités inférieures à 0,6 g/cm³.

7. Composition suivant au moins l'une des revendications 1 à 6, caractérisée en ce que le liant aqueux est une dispersion qui contient au moins un polymère organique et/ou un liant inorganique et dont la teneur en eau est inférieure à 90 % (v/v).

8. Composition suivant au moins l'une des revendications 1 à 7, caractérisée en ce que la composition contient 0,1 à 30 % en volume de fibres.

9. Composition suivant au moins l'une des revendications 1 à 8, caractérisée en ce que la composition contient un agent opacifiant aux IR.

10. Procédé de préparation d'une composition suivant au moins l'une des revendications 1 à 9, caractérisé en ce qu'on mélange les particules d'aérogel avec le liant aqueux.

11. Utilisation d'une composition suivant au moins l'une des revendications 1 à 9, pour la fabrication d'un matériau isolant, d'un matériau adhésif et/ou d'une feuille ainsi que comme agent auxiliaire dans l'électrotechnique.
